# EUROPEAN PATENT SPECIFICATION

(11) **EP 3 754 221 B1**
(45) Date of publication and mention of the grant of the patent: **02.03.2022**
(21) Application number: 18917901.3
(22) Date of filing: 23.11.2018
(51) Int. Cl.: F16F 9/04, F16F 13/20

(54) **AIR SPRING**
LUFTFEDER
RESSORT PNEUMATIQUE

(30) Priority: 08.05.2018 CN 201810433441
(43) Date of publication of application: 23.12.2020
(73) Proprietor: CRRC Qingdao Sifang Rolling Stock Research Institute Co., Ltd., Qingdao, Shandong 266000 (CN)
(72) Inventor: SU, Peng, Qingdao, Shandong 266000 (CN); ZHANG, Bo, Qingdao, Shandong 266000 (CN); SONG, Hongguang, Qingdao, Shandong 266000 (CN); WANG, Guodong, Qingdao, Shandong 266000 (CN)
(74) Representative: J A Kemp LLP
(86) International application number: PCT/CN2018/117114
(87) International publication number: WO 2019/214210

(56) References cited:
- CN-A- 108 518 441
- CN-U- 202 468 827
- CN-U- 204 871 045
- CN-Y- 201 110 341
- JP-A- H08 145 104
- JP-A- 2003 294 073
- JP-A- 2007 127 264
- JP-A- 2009 197 986
- US-B2- 9 759 282

## Description

### TECHNICAL FIELD

The present application belongs to the technical field of vibration reduction devices for rail vehicles, and particularly relates to an air spring.

### BACKGROUND ART

An air spring is mounted between a vehicle body and a bogie to transfer vertical load, transverse load, torque or the like, absorb vertical and transverse vibrations and provide a horizontal restoring force or the like, and thus has a great impact on stability and comfort of the vehicle. The air spring includes a top plate, a diaphragm and a rubber metal spring, wherein the top plate is located below the vehicle body or bolster to realize sealing and load transfer; the diaphragm is located below the top plate; and the rubber metal spring is located below the diaphragm. In a state where the air spring is inflated normally, the diaphragm plays a main role of reducing vibration, and the rubber metal spring plays an auxiliary role of reducing vibration at the same time. When the air spring is out of air due to an failure of the diaphragm or other reasons, the rubber metal spring plays a main role of reducing vibration to ensure the vehicle to run at a speed limit, and the diaphragm does not work.

When the air spring is used in a state of out of air, usually, a stiffness of the rubber metal spring is expected to be small under low-load conditions, to ensure high ride comfort of the vehicle; and meanwhile, the stiffness of the rubber metal spring is expected to be large under heavy-load conditions, to avoid damage to other components resulted from a subsidence of the vehicle body. However, the existing air spring products all adopt one rubber metal spring or a structure in which two rubber metal springs are connected in series. When the rubber metal spring is compressed by the top plate, there is an approximately exponential relationship between a vertical load and a vertical displacement, and a vertical load-vertical displacement curve is a continuous curve. Thus, when a low-load condition is changed to a heavy-load condition, the stiffness of the rubber metal spring increases smoothly, so that a deflection difference of the rubber metal spring under heavy-load and low-load conditions is large, and it is impossible to effectively avoid the damage to other components resulted from the subsidence of the vehicle body.

Japanese patent application JP2003294073A discloses an air spring. The air spring is disposed with a laminated rubber which is cylindrically formed above a lower face plate and an elastic stopper material of which spring constant is lower than that of the laminated rubber.

Japanese patent application JP2007127264A an air spring which improves the traveling stability of a vehicle at a curve of a rail.

### SUMMARY OF THE PRESENT INVENTION

In view of the aforementioned technical problems existed in prior air springs, the present application provides an air spring.

The present application employs the following technical solutions.

An air spring, comprises a top plate, a diaphragm, a first rubber metal spring and a second rubber metal spring; the diaphragm is arranged between the top plate and the first rubber metal spring; the first rubber metal spring is hollow to form a cavity, and the cavity of the first rubber metal spring penetrates through a top of the first rubber metal spring in a vertical direction, and the top of the first rubber metal spring is connected to a first support; the second rubber metal spring is fixedly inserted in the cavity of the first rubber metal spring; a top of the second rubber metal spring is connected to a second support, and a top of the second support corresponds to the top plate to come into contact with the top plate when the diaphragm is out of air; and, when the diaphragm is inflated, there is a height difference Δh between the top of the second support and the top of the first support, where the Δh≠0; a top of the first support corresponds to the top plate to come into contact with the top plate when the diaphragm is out of air; the second rubber metal spring is connected in parallel with the first rubber metal spring; and, the first support and the second support slide relative to each other in a vertical direction, but do not slide relative to each other in a horizontal direction.

Preferably, a height of the top of the second support is higher than a height of the top of the first support.

Preferably, a range of absolute value of the Δh is 10mm≤ | Δh | ≤30mm.

Preferably, the first support is sleeved outside the second support.

Preferably, the first support is in sliding fit with the second support.

Preferably, the first support and/or the second support is a friction block.

Preferably, the first rubber metal spring is a laminated auxiliary spring or an hourglass auxiliary spring.

Preferably, the second rubber metal spring is one of a laminated auxiliary spring, an hourglass auxiliary spring and a conical auxiliary spring.

Compared with the prior art, the present application has the following advantages and positive effects.

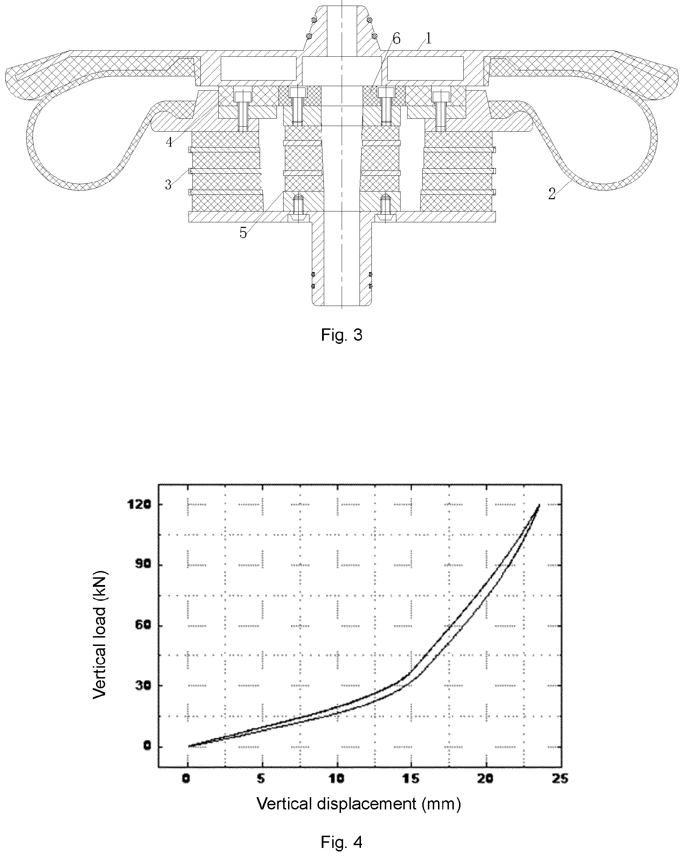

In the air spring provided by the present application, the second rubber metal spring and the second support are provided and connected in parallel with the first rubber metal spring and the first support, and the height difference Δh between the top of the second support and the top of the first support is set to be not equal to 0. When the diaphragm is out of air, the top plate first comes into contact with the first support or the second support to transfer the vertical load to the first rubber metal spring or the second rubber metal spring, so that the ride conform of the vehicle under a low-load condition is ensured. Then, after the vehicle enters a heavy-load condition from the low-load condition, the top plate comes into contact with both the first support and the second support to transfer the vertical load to both the first rubber metal spring and the second rubber metal spring. At this time, a stiffness of the air spring increases instantly. Meanwhile, as shown in Fig. 4, a vertical load-vertical displacement curve changes suddenly, so that a deflection difference between the heavy-load and low-load conditions is significantly reduced, and damage to other components resulted from the subsidence of the vehicle body is effectively avoided.

### BRIEF DESCRIPTION OF THE DRAWINGS

Fig. 1 is a schematic diagram of an overall structure of an embodiment of an air spring according to the present application;
Fig. 2 is a structural state diagram of the air spring of Fig. 1 under a low-load condition and a diaphragm is out of air;
Fig. 3 is a structural state diagram of the air spring of Fig. 1 under a heavy-load condition and the diaphragm is out of air; and
Fig. 4 is a schematic diagram of a vertical load-vertical displacement curve of the air spring according to the present application;
in which: 1: top plate; 2: diaphragm; 3: first rubber metal spring; 4: first support; 5: second rubber metal spring; and, 6: second support.

### DETAILED DESCRIPTION OF THE PRESENT INVENTION

The present application will be specifically described below by exemplary implementations. However, it should be understood that elements, structures and features in one implementation can be advantageously integrated into other implementations without further recitation.

In the description of the present application, it is to be noted that the orientation or position relation indicated by terms "inner", "outer", "upper", "lower", "front", "rear" or the like is an orientation or position relation shown by the accompanying drawings, merely for describing the present application and simplifying the description rather than indicating or implying that the specified device or element must have a particular orientation or be constructed and operated in a particular orientation. Therefore, the terms should not be interpreted as limitations to the present application. In addition, the terms "first" and "second" are merely descriptive, and cannot be interpreted as indicating or implying the relative importance.

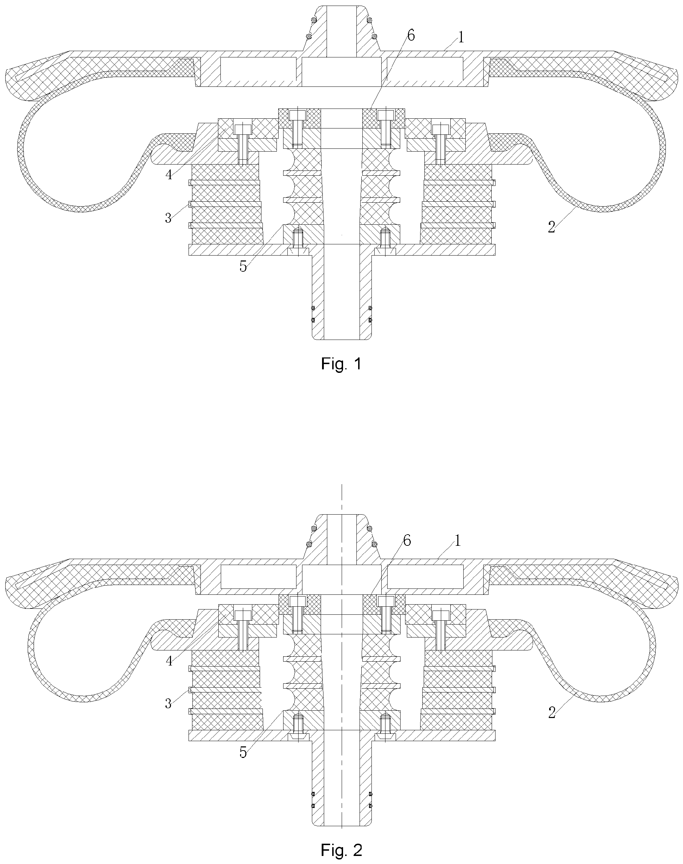

With reference to Fig. 1, an air spring is provided, comprising a top plate 1, a diaphragm 2 and a first rubber metal spring 3. The diaphragm 2 is arranged between the top plate 1 and the first rubber metal spring 3. The first rubber metal spring 3 is hollow to form a cavity. The cavity of the first rubber metal spring 3 penetrates through a top of the first rubber metal spring 3 in a vertical direction. The top of the first rubber metal spring 3 is connected to a first support 4, and a top of the first support 4 corresponds to the top plate 1 to come into contact with the top plate 1 when the diaphragm 2 is out of air, so that a vertical (i.e., in the vertical direction) load borne by the top plate 1 is transferred to the first rubber metal spring 3. So far, the abovementioned structures and the connection relationships between these structures are the same as or similar to that of the prior air springs, and will not be described in detail in the present application. To ensure ride comfort of a vehicle under a low-load condition and avoid damage to other components resulted from a subsidence of a vehicle body under a heavy-load condition, the present application further employs the following solutions.

The air spring provided by the present application further comprises a second rubber metal spring 5. The second rubber metal spring 5 is fixedly inserted in the cavity of the first rubber metal spring 3 to be connected in parallel with the first rubber metal spring 3. A top of the second rubber metal spring 5 is connected to a second support 6, and a top of the second support 6 corresponds to the top plate 1 to come into contact with the top plate 1 when the diaphragm 2 is out of air. In this case, the structure of the first support 4 should evade the second support 6 to ensure that the top of the second support 6 can come into contact with the top plate 1. Through the contact with the top plate 1, the second support 6 can transfer the vertical load borne by the top plate 1 to the second rubber metal spring 5. When the diaphragm 2 is inflated, a height difference Δh between the top of the second support 6 and the top of the first rubber metal spring 3 (more specifically, between the top of the second support 6 and the top of the first support 4) is set to be not equal to 0. In this case, to enable both the top of the second support 6 and the stop of the first support 4 to come into contact with the top plate, the second support 6 and the first support 4 must not be connected fixedly and can move relative to each other.

Based on the above description, in the air spring provided by the present application, the second rubber metal spring 5 and the second support 6 are provided and connected in parallel with the first rubber metal spring 3 and the first support 4, and the height difference Δh between the top of the second support 6 and the top of the first support 4 is set to be not equal to 0. When the diaphragm 2 is out of air, the top plate 1 first comes into contact with the first support 4 or the second support 6 to transfer the vertical load to the first rubber metal spring 3 or the second rubber metal spring 5, so that the ride conform of the vehicle under a low-load condition is ensured. Then, after the vehicle enters a heavy-load condition from the low-load condition, the top plate 1 comes into contact with both the first support 4 and the second support 6 to transfer the vertical load to both the first rubber metal spring 3 and the second rubber metal spring 5. At this time, a stiffness of the air spring increases instantly. Meanwhile, as shown in Fig. 4, a vertical load-vertical displacement curve changes suddenly, so that a deflection difference between the heavy-load and low-load condition is significantly reduced, and damage to other components resulted from the subsidence of the vehicle body is effectively avoided.

It is to be noted that, since a position of a inflection point where the vertical load-vertical displacement curve shown in Fig. 4 changes suddenly is determined by the value of Δh, a value range of Δh is set according to actual requirements for dividing the low-load condition and the heavy-load condition. Generally, the value range of Δh is 10 mm≤ | Δh | ≤30 mm. For example, I Δh | may be 15 mm, 20 mm, 25 mm, etc. Thus, the requirements of the low-load condition and the heavy-load condition can be well divided, and a safety of the vehicle in instantaneous parking or other situations can be better ensured. Wherein, | Δh | is the absolute value of Δh.

In an embodiment, as shown in Fig. 1, in a natural state (in a state where the diaphragm 2 is inflated), a height of the top of the second support 6 is higher than a height of the top of the first support 4. Thus, the second rubber metal spring 5 is responsible for reducing vibration under the low-load condition when the diaphragm 2 is out of air (referring to Fig. 2); and, the second rubber metal spring 5 and the first rubber metal spring 3 jointly reduce vibration under the heavy-load condition when the diaphragm 2 is out of air (referring to Fig. 3).

It should be understood that, in another embodiment (not shown in the drawings), it is also possible that the height of the top of the first support 4 is higher than the height of the top of the second support 6 in a natural state (in a state where the diaphragm 2 is inflated). Thus, the first rubber metal spring 3 is responsible for reducing vibration under the low-load condition when the diaphragm 2 is out of air; and, the first rubber metal spring 3 and the second rubber metal spring 5 jointly reduce vibration under the heavy-load condition when the diaphragm 2 is out of air.

With regard to a positional relationship between the first support 4 and the second support 6, in the embodiment shown in Figs. 1-3, the first support 4 is sleeved outside the second support 6, so as to restrict a horizontal movement of the second support 6, thereby restrict the relative lateral deviation between the first rubber metal spring 3 and the second rubber metal spring 5.

Specifically, as shown in Figs. 1-3, both the first support 4 and the second support 6 are friction blocks, so that the first support 4 and the second support 6 can be displaced relative to the top plate 1 when they come into contact with the top plate 1. Both the first support 4 and the second support 6 are annular, and the first support 4 and the second support 6 are detachably fixed to the top of the first rubber metal spring 3 and the top of the second rubber metal spring 5 through bolts, respectively.

The first support 4 is in sliding fit with the second support 6. That is, there is no gap between an inner surface of the first support 4 and an outer surface of the second support 6 (including clearance fit, in order to mount the second support 6 into the first support 4), and at the same time, it is ensured that the second support 6 can slide relative to the first support 4. That is, the first support 4 and the second support 6 can slide relative to each other in a vertical direction, but not in the horizontal direction. Accordingly, the relative lateral deviation between the first rubber metal spring 3 and the second rubber metal spring 5 is further restricted, a lateral collision between the second support 6 and the first support 4 is avoided, thereby a stability of the air spring when in use is improved.

As for a structure of the first rubber metal spring 3, it may be a laminated auxiliary spring or an hourglass auxiliary spring, so that the first rubber metal spring 3 can provide a cavity to accommodate the second rubber metal spring 5 and realize vertical reciprocating movement of the second support 6. In addition, as for a structure of the second rubber metal spring 5, it may be one of a laminated auxiliary spring, an hourglass auxiliary spring and a conical auxiliary spring. When the second rubber metal spring 5 is a laminated auxiliary spring, the space occupation is small, and the required size of the first rubber metal spring 3 is small.

Specifically, as shown in Figs. 1-3, both the first rubber metal spring 3 and the second rubber metal spring 5 are laminated auxiliary springs, the first rubber metal spring 3 and the second rubber metal spring 5 are arranged coaxially, and a bottom mounting plate of the first rubber metal spring 3 and a bottom mounting plate of the second rubber metal spring 5 are fixedly connected by bolts. The structure of the laminated auxiliary spring is a technology known to those skilled in the art, and will not be described in detail in the present application.

In addition, it is to be noted that, the structures of the hourglass auxiliary spring and the conical auxiliary spring, as alternatives of the laminated auxiliary spring, are also technologies known to those skilled in the art and will not be described in detail herein.

To better understand the above technical solutions of the present application, as shown in Figs. 2 and 3, an operation process of the air spring provided by the present application when the diaphragm 2 is out of air will be described below.

As shown in Fig. 2, when the load on the vehicle body is low, the second support 6 transfers the load to the second rubber metal spring 5. The second rubber metal spring 5 reduces vibration, and the first rubber metal spring 3 is not compressed and does not reduce vibration. At this time, the stiffness of the spring is low, and the ride comfort of the vehicle is better.

As shown in Fig. 3, when upper planes of the first support 4 and the second support 6 are flush with each other due to a large load on the vehicle body, both the first rubber metal spring 3 and the second rubber metal spring 5 are compressed by the top plate 1. At this time, due to the parallel connection between the first rubber metal spring 3 and the second rubber metal spring 5, the stiffness of the air spring increases suddenly, and the deflection difference of the air spring between low-load and heavy-load condition is reduced.

## Claims

1. An air spring, comprising a top plate (1), a diaphragm (2) and a first rubber metal spring (3); the diaphragm (2) is arranged between the top plate (1) and the first rubber metal spring (3); the first rubber metal spring (3) is hollow to form a cavity, and the cavity penetrates through a top of the first rubber metal spring (3) in a vertical direction, the top of the first rubber metal spring (3) is connected to a first support (4);
the air spring further comprises a second rubber metal spring (5), and the second rubber metal spring (5) is fixedly inserted in the cavity of the first rubber metal spring (3); a top of the second rubber metal spring (5) is connected to a second support (6), and a top of the second support (6) corresponds to the top plate (1) to come into contact with the top plate (1) when the diaphragm (2) is out of air; and, when the diaphragm (2) is inflated, there is a height difference Δh between the top of the second support (6) and the top of the first support (4), where the Δh≠0; **characterized in that**,
a top of the first support (4) corresponds to the top plate (1) to come into contact with the top plate (1) when the diaphragm (2) is out of air; the second rubber metal spring (5) is connected in parallel with the first rubber metal spring (3); and, the first support (4) and the second support (6) slide relative to each other in a vertical direction, but do not slide relative to each other in a horizontal direction

2. The air spring according to claim 1, **characterized in that** a height of the top of the second support (6) is higher than a height of the top of the first support (4).

3. The air spring according to claim 1, **characterized in that** a range of absolute value of the Δh is 10mm≤ | Δh | ≤30mm.

4. The air spring according to claim 1, **characterized in that** the first support (4) is sleeved outside the second support (6).

5. The air spring according to claim 4, **characterized in that** the first support (4) is in sliding fit with the second support (6).

6. The air spring according to claim 1, **characterized in that** the first support (4) and/or the second support (6) is a friction block.

7. The air spring according to any one of claims 1-6, **characterized in that** the first rubber metal spring (3) is a laminated auxiliary spring or an hourglass auxiliary spring.

8. The air spring according to claim 7, **characterized in that** the second rubber metal spring (5) is one of a laminated auxiliary spring, an hourglass auxiliary spring and a conical auxiliary spring.

## Patentansprüche

1. Luftfeder, die Folgendes umfasst: eine obere Platte (1), eine Membran (2) und eine erste Gummi-Metall-Feder (3); wobei die Membran (2) zwischen der oberen Platte (1) und der ersten Gummi-Metall-Feder (3) angeordnet ist; die erste Gummi-Metall-Feder (3) hohl ist, um einen Hohlraum zu bilden, und der Hohlraum die Oberseite der ersten Gummi-Metall-Feder (3) in vertikaler Richtung durchdringt, die Oberseite der ersten Gummi-Metall-Feder (3) mit einem ersten Träger (4) verbunden ist;
wobei die Luftfeder ferner eine zweite Gummi-Metall-Feder (5) umfasst, und die zweite Gummi-Metall-Feder (5) fest in den Hohlraum der ersten Gummi-Metall-Feder (3) eingesetzt ist; eine Oberseite der zweiten Gummi-Metall-Feder (5) mit einem zweiten Träger (6) verbunden ist, und ein oberer Teil des zweiten Trägers (6) mit der oberen Platte (1) korrespondiert, um mit der oberen Platte (1) in Kontakt zu kommen, wenn die Membran (2) luftleer ist; und, wenn die Membran (2) aufgeblasen ist, eine Höhendifferenz Δh zwischen der Oberseite des zweiten Trägers (6) und der Oberseite des ersten Trägers (4) besteht, wobei die Δh ≠ 0; **dadurch gekennzeichnet, dass**
ein oberer Teil des ersten Trägers (4) mit der oberen Platte (1) korrespondiert, um mit der oberen Platte (1) in Kontakt zu kommen, wenn die Membran (2) luftleer ist; die zweite Gummi-Metall-Feder (5) parallel zur ersten Gummi-Metall-Feder (3) verbunden ist; und, der erste Träger (4) und der zweite Träger (6) relativ zueinander in vertikaler Richtung gleiten, jedoch nicht relativ zueinander in horizontaler Richtung gleiten.

2. Luftfeder nach Anspruch 1, **dadurch gekennzeichnet, dass** eine Höhe der Oberseite des zweiten Trägers (6) höher ist als eine Höhe der Oberseite des ersten Trägers (4).

3. Luftfeder nach Anspruch 1, **dadurch gekennzeichnet, dass** ein Absolutwertbereich von Δh 10 mm ≥ | Δh | ≥ 30 mm beträgt.

4. Luftfeder nach Anspruch 1, **dadurch gekennzeichnet, dass** der erste Träger (4) außerhalb des zweiten Trägers (6) mit einer Hülse versehen ist.

5. Luftfeder nach Anspruch 4, **dadurch gekennzeichnet, dass** der erste Träger (4) mit dem zweiten Träger (6) im Schiebesitz ist.

6. Luftfeder nach Anspruch 1, **dadurch gekennzeichnet, dass** der erste Träger (4) und/oder der zweite Träger (6) ein Reibblock ist.

7. Luftfeder nach einem der Ansprüche 1 bis 6, **dadurch gekennzeichnet, dass** die erste Gummi-Metall-Feder (3) eine geschichtete Hilfsfeder oder eine Sanduhr-Hilfsfeder ist.

8. Luftfeder nach Anspruch 7, **dadurch gekennzeichnet, dass** die zweite Gummi-Metall-Feder (5) eine geschichtete Hilfsfeder, eine Sanduhr-Hilfsfeder oder eine konische Hilfsfeder ist.

## Revendications

1. Ressort pneumatique, comprenant une plaque supérieure (1), un diaphragme (2) et un premier ressort en caoutchouc-métal (3) ; le diaphragme (2) est agencé entre la plaque supérieure (1) et le premier ressort en caoutchouc-métal (3) ; le premier ressort en caoutchouc-métal (3) est creux pour former une cavité, et la cavité pénètre à travers une partie supérieure du premier ressort en caoutchouc-métal (3) dans une direction verticale, la partie supérieure du premier ressort en caoutchouc-métal (3) est reliée à un premier support (4) ;
le ressort pneumatique comprend en outre un deuxième ressort en caoutchouc-métal (5), et le deuxième ressort en caoutchouc-métal (5) est inséré de manière fixe dans la cavité du premier ressort en caoutchouc-métal (3) ; une partie supérieure du deuxième ressort en caoutchouc-métal (5) est relié à un deuxième support (6), et une partie supérieure du deuxième support (6) correspond à la plaque supérieure (1) pour venir en contact avec la plaque supérieure (1) lorsque le diaphragme (2) est à court d'air ; et, lorsque le diaphragme (2) est gonflé, il existe une différence de hauteur Δh entre la partie supérieure du second support (6) et la partie supérieure du premier support (4), où Δh≠0 ; **caractérisé en ce que**,
une partie supérieure du premier support (4) correspond à la plaque supérieure (1) pour venir en contact avec la plaque supérieure (1) lorsque le diaphragme (2) est à court d'air, le deuxième ressort en caoutchouc-métal (5) est connecté en parallèle avec le premier ressort en caoutchouc-métal (3) ; et, le premier support (4) et le deuxième support (6) coulissent l'un par rapport à l'autre dans une direction verticale, mais ne coulissent pas l'un par rapport à l'autre dans une direction horizontale.

2. Ressort pneumatique selon la revendication 1, **caractérisé en ce qu'**une hauteur de la partie supérieure du deuxième support (6) est supérieure à une hauteur de le partie supérieure du premier support (4).

3. Ressort pneumatique selon la revendication 1, **caractérisé en ce qu'**une plage de valeur absolue du Δh est 10mm≤|Δh|≤30mm.

4. Ressort pneumatique selon la revendication 1, **caractérisé en ce que** le premier support (4) est emmanché à l'extérieur du deuxième support (6).

5. Ressort pneumatique selon la revendication 4, **caractérisé en ce que** le premier support (4) est en ajustement glissant avec le deuxième support (6).

6. Ressort pneumatique selon la revendication 1, **caractérisé en ce que** le premier support (4) et/ou le deuxième support (6) est un bloc de friction.

7. Ressort pneumatique selon l'une quelconque des revendications 1 à 6, **caractérisé en ce que** le premier ressort en caoutchouc-métal (3) est un ressort auxiliaire laminé ou un ressort auxiliaire en forme de sablier.

8. Ressort pneumatique selon la revendication 7, **caractérisé en ce que** le deuxième ressort en caoutchouc-métal (5) est l'un d'un ressort auxiliaire laminé, d'un ressort auxiliaire en forme de sablier et d'un ressort auxiliaire conique.
